# FASCICULE DE BREVET EUROPEEN

(11) **EP 0 889 619 B1**
(45) Date de publication et mention de la délivrance du brevet: **27.10.2004**
(21) Numéro de dépôt: 98202123.0
(22) Date de dépôt: 24.06.1998
(51) Int. Cl.: H04L 27/12

(54) **Dispositif de modulation par déplacement de fréquence comportant un boucle de verrouillage de phase**
FSK-Modulator mit Phasenregelschleife
FSK modulator with a phase locked loop

(30) Priorité: 01.07.1997 FR 9708289
(43) Date de publication de la demande: 07.01.1999
(73) Titulaire: Koninklijke Philips Electronics N.V., 5621 BA Eindhoven (NL)
(72) Inventeur: Bech-Andersen, Kim, 75008 Paris (FR)
(74) Mandataire: Chaffraix, Jean

(56) Documents cités:
- EP-A- 0 577 323
- EP-A- 0 713 306
- DE-A- 4 410 721
- US-A- 4 538 136
- US-A- 5 157 358

## Description

L'invention concerne un dispositif de modulation par déplacement de fréquence comportant une entrée pour déplacement de fréquence et un circuit d'asservissement à verrouillage de phase formé notamment :
- d'un oscillateur de référence,
- d'un oscillateur réglable en fréquence muni d'une entrée de commande de fréquence,
- d'un détecteur de phase pour comparer en phase les signaux de sortie dudit oscillateur réglable avec ceux de la sortie de l'oscillateur de référence,
- d'un circuit de compensation,
- d'une liaison directe entre ladite entrée pour déplacement de fréquence et l'entrée de commande de fréquence.

La présente invention concerne un appareil électronique, tel qu'un poste téléphonique radiomobile, comportant un tel dispositif.

L'invention concerne aussi un procédé pour moduler en fréquence, au moyen de signaux de modulation; un oscillateur qui est muni d'une commande de fréquence par tension et auquel est adjointe une boucle d'asservissement de phase, procédé selon lequel on applique directement les signaux de modulation à l'entrée de commande en fréquence de l'oscillateur à commande par tension.

Le problème qui se pose dans un tel dispositif est qu'il est difficile de moduler en fréquence la porteuse du fait que la boucle d'asservissement s'oppose à toutes variations de fréquence.

Ce genre de modulation est imposé pour les postes radiomobiles faisant partie de réseau répondant à une norme du genre NAMPS en vigueur, notamment sur le territoire des Etats-Unis d'Amérique. Cette modulation est destinée à transmettre des informations de signalisation pour le réseau.

Il est connu des documents américains 5 157 358 et 4 538 136 d'appliquer les signaux de modulation à un circuit de compensation situé en sortie du circuit de mesure d'erreurs. Cependant cette mesure est estimée insuffisante dans le cadre de l'application envisagée. Du document allemand DE 44 10 7213, il est connu d'appliquer directement les signaux de modulation à l'oscillateur réglable en fréquence. Cette mesure est encore insuffisante par le fait que rien ne s'oppose à l'effet de la boucle qui va contrecarrer l'effet de ce signal de modulation.

L'invention propose un dispositif du genre mentionné dans le préambule qui se prête bien à un changement de la fréquence de porteuse pour transmettre une information.

Pour cela, un dispositif du genre mentionné dans le préambule est remarquable en ce que le circuit de compensation est conçu pour, au moins, atténuer le verrouillage de phase pendant les périodes de déplacement de fréquences.

L'invention propose un procédé remarquable en ce que l'on applique les signaux de modulation à un circuit de compensation qui atténue le verrouillage de phase pendant les périodes de déplacement de fréquences.

L'idée de l'invention repose sur le fait que l'on considère la modulation de fréquence à apporter comme une perturbation sur la fréquence de l'oscillateur et on prévoit une compensation pour annihiler ou pour contre-carrer, du moins en partie, cette perturbation pour éviter l'effet d'asservissement de la boucle.

La description suivante faite en regard des dessins ci-annexés, le tout donné à titre d'exemple non limitatif, fera bien comprendre comment l'invention peut être réalisée.
La figure 1 montre un dispositif conforme à l'invention.
La figure 2 montre une courbe de réponse d'un circuit d'asservissement de phase.

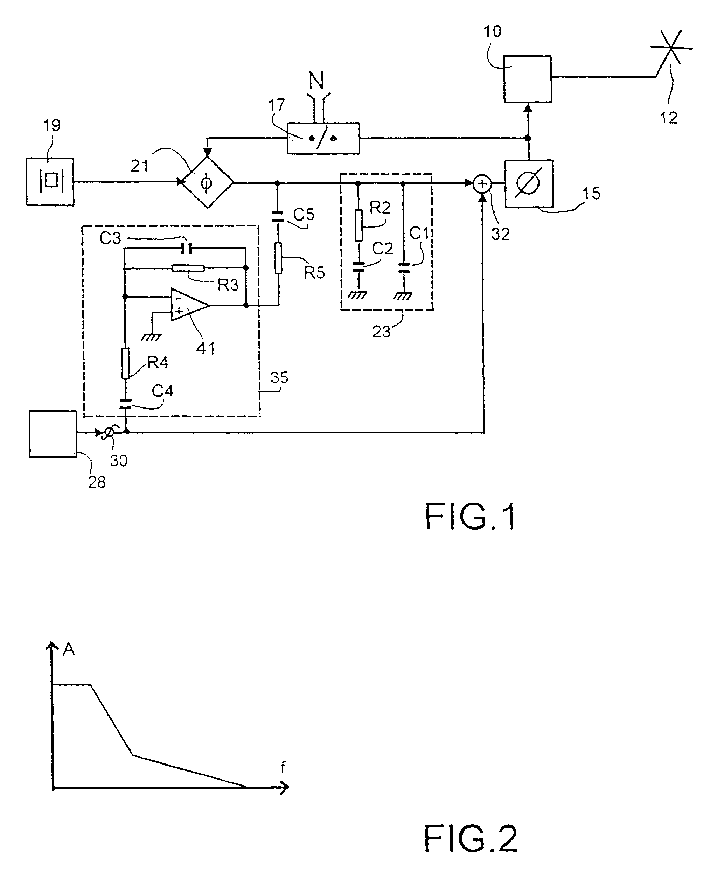

La figure 1 montre schématiquement un appareil électronique et plus précisément un poste téléphonique radiomobile utilisé dans des réseaux cellulaires tels que ceux définis par les normes NAMPS précitées. Cet appareil comporte une partie radioélectrique 10 avec laquelle des ondes sont émises et reçues par l'intermédiaire d'une antenne 12. Cette partie radio 10 est pilotée par les signaux de sortie d'un oscillateur à fréquence réglable 15, connu sous la dénomination VCO. Cet oscillateur est asservi en phase par une boucle de verrouillage comportant les éléments suivants :
- un diviseur de fréquence 17 pour diviser la fréquence des signaux de sortie de l'oscillateur selon une valeur de division N qui varie en fonction des besoins de l'utilisation,
- un oscillateur de référence 19 constitué selon les technologies habituelles par un quartz,
- un détecteur de phase 21 dont les signaux de sortie sont dirigés vers la commande de fréquence de l'oscillateur réglable par l'intermédiaire d'un filtre de boucle 23. Ce filtre de boucle est formé d'une part par un condensateur C1 mis en parallèle sur la sortie du détecteur de phase 21 et d'autre part par un montage, mis aussi en parallèle sur la sortie du détecteur de phase, comprenant en série une résistance R2 et un condensateur C2.

Pour pouvoir émettre des données à faible débit, la fréquence de l'oscillateur 15 doit être changée, par exemple pour transmettre des signaux numériques, cette fréquence est déviée de l'ordre de 700 Hz à un rythme de 100 Hz environ, pour une valeur de repos de l'ordre de 900 MHz. Ces signaux de modulation proviennent d'une source de modulation 28 qui applique ses signaux à la borne d'entrée de modulation 30. Ces signaux sont appliqués à la commande de fréquence de l'oscillateur 15 par l'intermédiaire d'un additionneur de signaux 32.

A la figure 2, on a montré la courbe de réponse d'une telle boucle d'asservissement de phase. En ordonnées, on a le gain A de la boucle et en abscisses la fréquence f considérée. Sur cette courbe on se rend compte que le gain est le plus élevé aux fréquences basses et que la boucle va s'opposer au déplacement de la fréquence de cet oscillateur 15.

Pour permettre tout de même ce changement de fréquence, conformément à l'invention, il est prévu un circuit de compensation 35.

Ce circuit 35 est constitué par un circuit intégrateur avec un effet inverseur. Cet intégrateur est élaboré à partir d'un amplificateur 41. A cet amplificateur, on a adjoint une contre-réaction placée entre sa sortie et son entrée inverseuse et formée d'une résistance R3 et C3 montée en série. Cette contre-réaction est complétée par une résistance R4 en série avec un condensateur C4 pour recevoir la modulation. La sortie de cet amplificateur est reliée à la sortie du détecteur de phase 21 par l'intermédiaire d'une résistance R5 en série avec un condensateur C5. Les condensateurs C4 et C5 sont des condensateurs de valeur relativement élevée et servent, entre autres, de découplage. La valeur de R5 est assez élevée et ne perturbe pas la fonction intégrateur du circuit 35.

Ainsi quand une modulation est appliquée à la borne 30, elle est tout d'abord appliquée à l'oscillateur 15. Il va donc avoir tendance à dériver et la boucle va corriger en donnant un signal de correction dont l'allure est donnée par l'intégrale du signal de perturbation que constitue la modulation.

Par l'invention, le circuit 35 va créer une tension antagoniste qui va s'opposer à la correction apportée par la boucle. De ce fait on obtient que la fréquence de l'oscillateur va changer puisque l'effet de la perturbation est en quelques sorte annihilée. Il va de soi que la fonction de transfert du circuit 35 dépend des caractéristiques de la fonction de réponse de la boucle d'asservissement de phase.

On notera que le condensateur C5 évite que le circuit de compensation prolonge ses effets au delà d'une durée trop longue et que la résistance R4 permet la juxtaposition sans effet néfaste des signaux aux sorties des détecteurs de phase 21 et du circuit 35.

En outre, comme le détecteur de phase se comporte comme une source de courant, unze fonction d'intégration se trouve créée avec le condensateur C1.

L'intégrateur constitué par le circuit 35 est optimisé pour obtenir le maximum de compensation aux basses fréquences désirées. Aionsi, les effets apportés dans le spectre sonore, celui qui en fait contient les signaux de conversation, sont si petits que les mesures apportées par l'invention ne détériorent en rien ce spectre sonore.

## Revendications

1. Dispositif de modulation par déplacement de fréquence comportant une entrée pour déplacement de fréquence (30) et un circuit d'asservissement à verrouillage de phase formé notamment :
- d'un oscillateur de référence (19),
- d'un oscillateur (15) réglable en fréquence muni d'une entrée de commande de fréquence (32),
- d'un détecteur de phase (21) pour comparer en phase les signaux de sortie dudit oscillateur réglable avec ceux de la sortie de l'oscillateur de référence,
- d'un circuit de compensation (35)
- d'une liaison directe entre ladite entrée pour déplacement de fréquence (30) et l'entrée de commande de fréquence (32),
**caractérisé en ce que** le circuit de compensation est conçu pour, au moins, atténuer le verrouillage de phase pendant les périodes de déplacement de fréquences.

2. Dispositif selon la revendication 1, **caractérisé en ce que** le circuit de compensation est formé à partir d'un intégrateur (41; C3 ; R3) pour compenser la perturbation de modulation apportée audit oscillateur.

3. Appareil de radiomobile comportant un dispositif selon l'une des revendications 1 à 2.

4. Procédé pour moduler en fréquence au moyen de signaux de modulation un oscillateur (15) qui est muni d'une commande de fréquence par tension et auquel est adjointe une boucle d'asservissement de phase, procédé selon lequel on applique directement les signaux de modulation à l'entrée de commande en fréquence de l'oscillateur à commande par tension, **caractérisé en ce que** l'on applique les signaux de modulation à un drcuit de compensation (35) qui atténue le verrouillage de phase pendant les périodes de déplacement de fréquences.

## Patentansprüche

1. Vorrichtung zur Modulation mit Frequenzumtastung mit einem Eingang für die Frequenzumtastung (30) und einer Verriegelungsschaltung mit Phasenregelung, insbesondere bestehend aus:
- einem Referenzoszillator (19),
- einem in der Frequenz regelbaren Oszillator (15), ausgestattet mit einem Frequenzsteuereingang (32),
- einem Phasendetektor (21) für den Vergleich in Phase der Ausgangssignale des besagten regelbaren Oszillators mit denen des Ausgangs des Bezugsoszillatos,
- einer Ausgangsschaltung (35)
- einer direkten Verbindung zwischen dem besagten Eingang für die Frequenzumtastung (30) und dem Frequenzsteuereingang (32),
**dadurch gekennzeichnet, dass** die Ausgleichsschaltung zumindest vorgesehen ist, um die Phasenregelung während den Frequenzumtastungsperioden zu mindern.

2. Vorrichtung nach Anspruch 1, **dadurch gekennzeichnet, dass** die Ausgleichsschaltung aus einem Integrator (41; C3; R3) gebildet wird, um die dem besagten Oszillator zugeführte Modulationsstörung zu kompensieren.

3. Mobilfunktelefon mit einer Vorrichtung nach einem der Ansprüche 1 bis 2.

4. Verfahren zur Frequenzmodulation eines Oszillators (15) mit Modulationssignalen, der mit einer Spannungsfrequenzsteuerung ausgerüstet und mit einer Phasenverriegelungsschleife ausgestattet ist, wobei man nach diesem Verfahren die Modulationssignale direkt an den Frequenzsteuereingang des spannungsgesteuerten Oszillators führt, **dadurch gekennzeichnet, dass** man die Modulationssignale einer Ausgleichsschaltung (35) zuführt, welche die Phasenregelung während den Frequenzumtastungsperioden mindert.

## Claims

1. A modulation frequency shift keying device having an input for frequency shift keying (30) and a phase locked loop notably formed by:
- a reference oscillator (19),
- a frequency-controlled oscillator (15) having a frequency control input (32),
- a phase detector (21) for comparing the phase of the output signals of said controlled oscillator with those of the output of the reference oscillator,
- a compensation circuit (35),
- a direct link between said frequency shift keying input (30) and the common frequency input (32), **characterized in that** the compensation circuit is arranged for at least attenuating the phase locking during the periods of frequency shift keying.

2. A device as claimed in claim 1, **characterized in that** the compensation circuit is formed by an integrator (41; C3; R3) for compensating the modulation disturbance provided by said oscillator.

3. A mobile radio comprising a device as claimed in one of the claims 1 to 2.

4. A method of modulating the frequency of an oscillator (15) which has a voltage controlled frequency and to which is added a phase-locked loop, according to which method the modulation signals are directly applied to the frequency controlled input of the voltage controlled oscillator, **characterized in that** the modulation signals are applied to a compensation circuit (35) which attenuates the phase locking during the periods of frequency shift keying.
